# EUROPEAN PATENT SPECIFICATION

(11) **EP 3 783 525 B1**
(45) Date of publication and mention of the grant of the patent: **21.05.2025**
(21) Application number: 19193138.5
(22) Date of filing: 22.08.2019
(51) Int. Cl.: G06F 18/25, G06V 10/80, G06V 10/82, G06V 20/58

(54) **METHOD FOR DETECTING AN OBJECT IN SURROUNDINGS OF A VEHICLE, CORRESPONDING SYSTEM AND VEHICLE**
VERFAHREN ZUR DETEKTION EINES OBJEKTS IN DER UMGEBUNG EINES FAHRZEUGS, ZUGEHÖRIGES SYSTEM UND FAHRZEUG
PROCÉDÉ POUR DÉTECTER UN OBJET DANS LES ENVIRONS D'UN VÉHICULE, SYSTÈME CORRESPONDANT ET VÉHICULE

(43) Date of publication of application: 24.02.2021
(73) Proprietor: Argo AI GmbH, 80805 München (DE)
(72) Inventor: MEERTENS, Roland, 80807 München (DE)
(74) Representative: Bonsmann, Joachim Bernhard

(56) References cited:
- EP-A1- 3 511 863
- US-A1- 2019 034 762
- US-A1- 2019 096 086
- US-A1- 2019 205 765

## Description

The invention is concerned with a method for detecting an object in surroundings of a second vehicle, wherein a first vehicle and the second vehicle each comprise at least one respective sensor for generating sensor data and a machine learning unit for recognizing an object type (e.g. car, person, bicycle, dog) of the object on the basis of the respective sensor data. The invention is also concerned with a system for performing the method. The invention also provides two different types of vehicles that may be operated as the first and the second vehicle in said system.

Common known self-driving vehicles detect objects in its surroundings by means of at least one sensor and a machine learning unit. Such a machine learning unit receives image data (camera images) from an image sensor (camera) and an artificial neural network of the machine learning unit recognizes object types (e.g. car, person, bicycle, dog) of objects on the basis of the image data. The artificial neural network comprises several layers of artificial neurons (multi-layer network). A typical structure of such a neural network comprises a bottom layer or final layer which generates an output indicating the object type of the object. This final step is also named "classification". In other words, information about known objects types is stored in this final layer. The remaining, higher layers or preceding layers of the neural network provide preprocessing steps, i.e. locating the object in camera images and/or isolating or extracting features (edges, shape, color) of the object from the image data. It is these object features that are presented to the final layer for identifying or classifying the object type. For receiving the image data, the neural network comprises a top layer or input layer.

In the case that the machine learning unit is confronted with image data of an object of a new or unknown object type, the image data will also be processed by the neural network such that the described object features are extracted from the image data and a representation of these object features is provided to the final layer e.g. by the penultimate layer (layer before the final layer). However, the final layer or bottom layer of the neural network will not associate this set of object features with any of the known object types. The bottom layer will therefore deliver no output. In other words, the object recognition will not indicate that an object is present at all, as the extracted features are not associated with an object. One example for a new or unknown object type may be a "wolf", if the neural network has only been trained to recognize dogs and cats.

Training an artificial neural network to such a degree that it will recognized all possible object types would require too many resources.

The described problem may arise with a machine learning unit in general, not only an artificial neural network. Another type of machine learning unit may comprise, e.g., a decision tree.

Document US 8,416,296 B2 describes a system for detecting the occurrence of unusual events in a video stream. Unusual events need not be defined in advance as they are identified on the basis of clustering and a statistical analysis. This method still required that all possible event types can be recognized by the system, as otherwise they cannot be taken into account in the statistical evaluation.

Document EP 3 511 863 A1 relates to learning representation of detected objects. The disclosure relates to technologies for distributable learning of a compact representation of detected objects in order to associate multiple observations from multiple vehicles by identifying a subset of features of a first object and a second object as being more determinative than other features of the first object and the second object based on a comparison of a similarity score.

Document US 2019 / 034762 A1 describes neural networks that are designed to extract features based on an image of an object.

Document US 2019 / 0205765 A1 describes an artificial neural network that is designed to indicate when an object cannot be recognized based on the available sensor data. In the case of an unrecognizable object, a new artificial neural network is trained by a server.

Document US 2019 / 096086 A1 describes an object recognition algorithm that uses both an image feature extraction and an geometric feature analysis.

It is an object of the present invention to provide an object recognition that will provide reliable output even in the case of objects of unknown object type.

The object is accomplished by the subject matter of the independent claims. Advantageous developments with convenient and non-trivial further embodiments of the invention are specified in the following description, the dependent claims and the figures.

The invention provides a method for detecting an object in the surroundings of a vehicle. In the sequel, this vehicle is termed "second vehicle", as the steps performed by this vehicle follow the steps that are performed by a first vehicle. This first vehicle and the second vehicle each comprise at least one image sensor for generating sensor data and a machine learning unit for recognizing an object type of the object on the basis of the respective sensor data. The at least one image sensor may comprise a camera, for example. Accordingly, the sensor data may comprise image data of the camera. The object type that may be recognized by the respective machine learning unit of the first and the second vehicle may indicate, for example, that the object is a car or a person or a bicycle or an animal, just to name a few exemplary object types. In other words, the machine learning unit in each of the two vehicles receive sensor data from the at least one image sensor of the respective vehicle. On the basis of the received sensor data, it may decide or signal or indicate that an object of a specific, known object type is present in the surroundings of the respective vehicle.

The machine learning unit can be an artificial neural network or a decision tree.

In the context of this disclosure, the conjunction "or" is not meant exclusively, but shall include any combination of features possible, if not otherwise indicated.

For this reason, the following general description of a machine learning unit is used for describing the invention. The machine learning unit may comprise an input logic which may receive the sensor data from the at least one sensor. The classification output signal that indicates the object type of the object is produced or generated by a classification output logic. In the case of an artificial neural network, the input logic may be the said top layer and the classification output logic may be said bottom layer of the neural network. In between the input logic and the classification output logic, at least one intermediate processing element is provided in the machine learning unit. In the case of an artificial neural network, such an intermediate processing element can be an intermediate layer of artificial neurons.

The inventive method comprises steps that are performed in the first vehicle. The first vehicle uses at least one additional sensor, i.e. an additional sensor that is not used in connection with the machine learning unit. Such an additional sensor can be, e.g., a radar or a sonar. The at least one additional sensor is used for detecting the object independently from the machine learning unit. It is then verified that the two following conditions apply or are fulfilled: The first condition says that the at least one additional sensor signals that the object is in the surrounding of the first vehicle. In other words, the presence of the object is detected in the surroundings of the first vehicle or near the first vehicle by means of the at least one additional sensor. The object type of the detected object may stay unknown. The second condition says that the classification output logic of the machine learning unit of the first vehicle fails to provide a corresponding classification output signal indicating a known object type. In other words, the machine learning unit fails to recognize the object type of the detected object. If the first vehicle would only rely on the output of the machine learning unit, this would result in an undetected object. If the two conditions are fulfilled, i.e. if a) the at least one additional sensor signals that the object is present in the surroundings of the first vehicle and b) a classification output logic of the machine learning unit of the first vehicle fails to provide a corresponding classification output signal indicating a known object type, then predefined representation data of at least one intermediate processing element of the machine learning unit is extracted. In other words, although the classification output logic, i.e. the last processing layer or last processing element of the machine learning unit, does not recognize the object type, nevertheless inside the machine learning unit, in the at least one intermediate processing element, there is still information about the object in the form of representation data. These representation data comprise a representation of object features of the object as they have been extracted from the sensor data by the machine learning unit. Such object features may comprise, e.g., edges and/or color and/or contrast and/or texture. All that the machine learning unit fails to do is to successfully associate these extracted object features with one known object type. Nevertheless, the extracted representation data may still be used to at least recognize that there is an object at all, even if the object type may stay unknown.

To this end, these extracted representation data are transferred as reference data to the machine learning unit of the second vehicle. In other words, in the second vehicle information is now available which object features of the object could be successfully extracted by the machine learning unit of the first vehicle although the final classification of the object type was not possible. The second vehicle is now enabled to use these reference data to at least detect the presence of the object in its surroundings without knowing the object type. An additional sensor is not needed in the second vehicle for this.

Instead, the machine learning unit of the second vehicle operates a predefined detection logic which comprises that at least one intermediate processing element of the machine learning unit of the second vehicle (i.e. not the classification output logic) is linked to the detection logic. Thus, representation data of the at least one intermediate processing element of the machine learning unit of the second vehicle is available to the detection logic. The detection logic compares these local representation data with the received reference data. In other words, the detection logic verifies or observes, if the machine learning unit of the second vehicle observes similar or comparable or the same object features as the machine learning unit of the first vehicle did when the at least one additional sensor of the first vehicle detected the object. If this is the case, this means that the object is present in the surroundings of the second vehicle although the classification output logic of the machine learning unit of the second vehicle might not generate a classification output signal as the object type of the object is still unknown. In other words, if the detection logic detects that the (local) representation data and the received reference data fulfil a predefined similarity criterion, an auxiliary detection signal is generated indicating that the object of unknown object type has been detected. In other words, although the classification output logic of the machine learning unit of the second vehicle might stay silent or might fail to provide a classification output signal, the auxiliary detection signal of the detection logic signals that the object is present in the surroundings of the second vehicle.

The detection unit may be provided as a replacement or supplement to the classification output logic of the machine learning unit of the second vehicle. This would consequently prevent a generation of a classification output signal even if an object of known object type is detected. Alternatively, the detection logic might be linked to the at least one intermediate processing element as an additional logic, i.e. the classification output logic may still be in operation.

The invention provides the advantage, that in the second vehicle -without the need of at least one additional sensor- the machine learning unit and its detection logic is still be able to signal the presence of the object of unknown object type only on the basis of the at least one sensor which provides the sensor data for the machine learning unit of the second vehicle.

As it has already been explained, the machine learning unit may be based on any of the previously mentioned machine learning method or algorithm. Also, a combination of at least two machine learning algorithms may be provided.

According to one aspect, the first vehicle and in the second vehicle each comprises a respective machine learning unit which provides or comprises an artificial neural network. Consequently, the respective classification output logic comprises a final layer or bottom layer or output layer of the neural network. In other words, the classification output logic is constituted at least partially by this bottom layer or final layer. The respective at least one intermediate processing element from which the representation data are taken, comprises at least one intermediate or higher layer of the neural network, i.e. at least one layer each of which is not the last layer or bottom layer. The respective representation data that are extracted from the machine learning unit, comprise layer data of the at least one higher layer (i.e. the at least one intermediate processing element). Such layer data may describe a respective state of at least one artificial neuron of that respective layer. Using a respective artificial neural network in each machine learning unit provides the advantage that the representation data provide a higher-level representation or abstract representation of the object as compared to the raw sensor data. Preferably, the type and/or structure of the artificial neural networks of both vehicles are identical or based on the same neural network prototype. This make the representation data compatible.

Additionally, or alternatively, according to a second aspect in the first vehicle and in the second vehicle the respective machine learning unit each comprises a decision tree. In a decision tree, the respective classification output logic comprises the leaves of the decision tree which perform the actual classification regarding the object type of an observed object. The respective at least one intermediate processing element comprises at least one decision node of the decision tree. The respective representation data which is extracted from the decision tree comprise node data of the at least one decision node. Such node data may describe or indicate the decision that has been made at that node based on sensor data. In a decision tree, the advantage may be realized that a part of the decision tree may be replaced by said detection logic on the basis of the reference data.

The at least one additional sensor that is used in the first vehicle for detecting the object without the need of the machine learning unit, comprises a radar or sonar (ultrasonic detector) or lidar. This type of additional sensor allows for detecting the presence of the object without the need of interpreting or recognizing its object type.

The invention also comprises additional embodiments which provide additional advantages.

In one embodiment for transferring the reference data from the first vehicle to the second vehicle, a digital map database is provided for storing different reference data of several different objects of unknown object type. In other words, more than one object may be observed by the first vehicle or by several vehicles which act as a respective first vehicle. For each observed object corresponding reference data will then be available. These are stored in the digital map database. This digital map database may be located, e.g. in an internet server or in a server cloud of the Internet. The reference data of each object are stored together with respective location data indicating a spatial area or place or position where the respective object has been observed. Before or whenever the second vehicle or a vehicle acting as a second vehicle (there may be more than one such second vehicle) enters a respective spatial area, the corresponding reference data for this spatial area are transferred to the second vehicle. In other words, the second vehicle is provided with those reference data that belong to at least one object of unknown object type that has been observed in the corresponding spatial area. This provides the advantage that the detection logic need not be operated with all available reference data, but only those reference data are used which belong to the spatial area in which the second vehicle is currently driving or which the second vehicle is approaching. This reduces the computational load in the decision logic of the second vehicle.

Accordingly, in one embodiment the detection logic of the machine learning unit of the second vehicle only uses the reference data for the spatial area in which the second vehicle is currently driving in. This ensures that in the second vehicle representation data are only compared against those reference data that describe at least one object which may actually be present in the spatial area.

In one embodiment the detection logic compares the local extracted representation data with the reference data on the basis of a mathematical distance measure. A distance measure provides only none-negative distance values, i.e. values equal or greater than 0. The similarity criterion comprises that the distance measure indicates a distance that is smaller than a predefined threshold. In other words, if the reference data and the extracted representation data yield a distance value smaller than the predefined threshold, then the similarity criterion is fulfilled. One distance measure can be the distance between vectors. For this, the representation data and the extracted reference data can each be written as a respective vector. Another version of a mathematical distance measure is a so-called distance matrix.

In one embodiment, at least a part of the classification output logic and/or at least one intermediate processing element of the machine learning unit of the second vehicle is replaced by the detection logic. In other words, the replaced part of the machine learning unit cannot generate a classification output signal anymore, as it has been replaced by the detection logic. Only the auxiliary detection signal is possible in this case for the replaced part. This embodiment has been proven especially advantageous in regard to a decision tree.

In one embodiment, the at least one sensor for generating sensor data in the first vehicle and/or in the second vehicle respectively comprises a camera and the sensor data comprise image data accordingly. A camera has proven suitable regarding the detection of an object on the basis of a machine learning unit.

As has been described in connection with the method, the first vehicle and the second vehicle build or constitute a system which is also part of the invention. The system is for detecting an object in surroundings of a second vehicle. The system comprising at least two vehicles, wherein each vehicle comprises at least one sensor for generating sensor data and a machine learning unit for detecting the object on the basis of the sensor data. Each sensor may be designed to provide its respective sensor data on the basis of observations of the surroundings of the respective vehicle. The respective machine learning unit of each vehicle is designed to detect the object on the basis of the sensor data. The system may comprise several vehicles of the described type. However, at least one of these vehicles or several of these vehicles may be operated as a respective first vehicle, i.e. at least one of the vehicles additionally comprises at least one additional sensor for detecting the object independently of the respective machine learning unit of the vehicle. The remaining at least one vehicle may be operated as a respective second vehicle in the described sense.

The system is designed to perform an embodiment of the inventive method by operating the at least one vehicle with the respective at least one additional sensor as a respective first vehicle and the at least one remaining vehicle as a respective second vehicle in the described sense.

For providing this system, two different vehicle types are needed which are also part of the invention.

For providing a first vehicle in the described sense, the invention provides a vehicle for the inventive system wherein the vehicle comprises at least one sensor for generating sensor data and a machine learning unit for detecting an object on the basis of the sensor data in the surroundings of the vehicle. This vehicle also comprises at least one additional sensor for detecting the object independently of the machine learning unit. A control unit of the vehicle is designed to perform the following steps which has already been described in connection with the method. If a) the at least one additional sensor signals that the object is in the surroundings of the first vehicle and b) a classification output logic of the machine learning unit of the vehicle fails to provide a corresponding classification output signal indicating a known object type, predefined representation data of at least one intermediate processing element of the machine learning unit is extracted, wherein the representation data comprise a representation of object features of the object as they have been extracted from the sensor data by the machine learning unit. These extracted representation data are sent out by the vehicle as reference data.

The invention also comprises embodiments of the vehicle that comprise features as they have already been described in connection with embodiments of the inventive method. For this reason, the corresponding embodiments of the vehicle are not described here again.

The invention also provides a vehicle that may be operated as a second vehicle in the system. This vehicle for the inventive system comprises at least one sensor for generating sensor data and a machine learning unit for detecting the object on the basis of the sensor data in the surroundings of the vehicle. A control unit of the vehicle is designed to perform the following steps. Reference data for the machine learning unit are received and the machine learning unit operates a predefined detection logic which comprises that at least one intermediate processing element (i.e. not the classification output logic) of the machine learning unit is linked to the detection logic and the detection logic compares representation data of the at least one linked intermediate processing element with the received reference data. If the detection logic detects that the representation data and the received reference data fulfill a predefined similarity criterion, an auxiliary detection signal is generated indicating that an object of unknown object type has been detected.

The invention also comprises embodiments of this vehicle which are based on features that have already been described in connection with embodiments of the inventive method. These corresponding embodiments of the vehicle are therefore not described here again.

Each vehicle of the inventive system is preferably designed as a motor vehicle, especially a passenger vehicle or a truck or a bus. Each vehicle may be designed as an autonomously driving vehicle comprising a corresponding electronic control unit providing an autopilot functionality.

The invention also comprises the combination of the features of the described embodiments.

In the following an implementation example of the invention is described. The figures show:
- Fig. 1: a schematic illustration of an embodiment of the inventive system;
- Fig. 2: a sketch for illustrating a method that may be performed by the system of Fig. 1; and
- Fig. 3: a sketch illustrating an alternative embodiment of the method.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figures identical reference signs indicate elements that provide the same function.

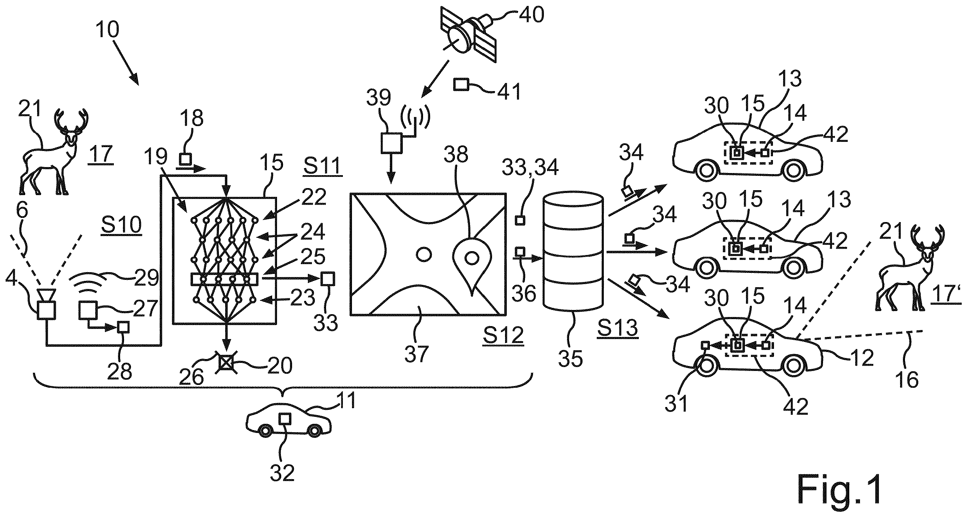

Fig. 1 shows a system 10 that may be based on several vehicles 11, 12, 13. At least one vehicle 11 may be operated or may function as a first vehicle 11 in system 10. At least one remaining vehicle 12, 13 may be operated or may function as a second vehicle in system 10. Each vehicle 11, 12, 13 may comprise at least one sensor 14 and a respective machine learning unit 15. The at least one sensor 14 may comprise at least one camera or more general at least one image sensor. A capture area or region of coverage 16 of sensor 14 may aim or may be directed towards respective surroundings 17, 17' of the respective vehicle 11, 12, 13. Fig. 1 shows this for the first vehicle 11 and for one second vehicle 12.

The respective at least one sensor 14 may generate or produce sensor data 18, e.g. image data in the case of a camera. The sensor data 18 may be provided to the machine learning unit 15 of the respective vehicle 11, 12, 13. Each machine learning unit 15 may be based on an artificial neural network 19 as it is shown in Fig. 1 for the first vehicle 11. On the basis of sensor data 18, the respective machine learning unit 15 may produce or generate or output a classification output signal 20. If in the surroundings 17 within the region of coverage 16 an object 21 is detected or seen or described by sensor data 18, the classification output signal 20 may describe an object type of the detected object 21. For example, as an object type, classification output signal 20 may signal that the object 21 is one of a vehicle, a specific stationary object (e.g. a pole or traffic light), a pedestrian, and an animal.

The classification output signal 20 may be fed into or maybe provided to an electronic control unit that provides an autopilot functionality. The electronic control unit may then adapt a planned driving trajectory of vehicle 11 in order to avoid e.g. a collision with object 21. The same may be implemented in the other vehicles 12, 13 of the system 10.

The machine learning unit 15 may have the following structure. The sensor data 18 may be provided as an input to an input logic 22. The final classification, i.e. the generation of the classification output signal indicating a known object type, may be performed by a classification output logic 23. For processing the received sensor data 18, especially for extracting or deriving object features of the object from the sensor data 18, at least one intermediate processing element 24, 25 may be provided between the input logic 22 and the output logic 23. In the case that machine learning unit 15 comprises an artificial neural network 19, the input logic 22 may be provided by an input layer or top layer, the classification output logic 23 may be provided by a bottom layer or final layer or output layer, and the at least one intermediate processing element 24, 25 may each be provided by a respective intermediate layer of the neural network 19 (multilayer neural network).

For detecting or recognizing an object type of a detected object 21, machine learning unit 15 must be trained or prepared in such a way, that the object type of the object 21 is known. In the case that object 21 is of unknown object type, no classification output signal 20 indicating a known object type is generated. Accordingly, the electronic control unit providing the autopilot functionality may not react to the appearance of the object 21.

The system 10 may prevent that due to a failure 26 of providing a classification output signal 20 in the case of an object 21 of unknown object type, no information about the object 21 in the respective surroundings 17, 17' of the respective vehicle 11, 12, 13 is missing or emitted. This may be achieved as follows.

In the first vehicle 11, at least one additional sensor 27 may be provided which may generate a detection signal 28 indicating the presence of an object 21 in the surroundings 17. The additional sensor 27 may be a close range sensor and/or a radar 29 and/or lidar and/or sonar.

In each vehicle 12, 13, where no additional sensor 27 may be available for generating the detection signal 28, the respective machine learning unit 15 may operate or provide an additional detection logic 30 which may be able to generate an auxiliary detection signal 31 in the case that in the region of coverage 16 of the second vehicle 12, 13 in the surroundings 17' of that vehicle 12, 13 an object 21 of unknown object type is detected or visible or detectable. In other words, also the respective machine learning unit 15 of vehicle 12, 13 may not generate the classification output signal 20 due to an unknown object type of object 21, the detection logic 30 may still generate an auxiliary detection signal 31.

For providing the respective detection logic 30 of each second vehicle 12, 13 with necessary information, the following method may be performed.

In a first step S10, in the first vehicle 11, an electronic control unit 32 may detect that the at least one additional sensor 27 signals that an object 21 is in the surroundings 17 of the first vehicle 11 and at the same time the classification output logic 23 of the machine learning unit 15 of the first vehicle 11 fails to provide the corresponding classification output signal 20 indicating a known object type. In this case, in a step S11, predefined representation data 33 of at least one intermediate processing element 25 of the machine learning unit 15 is extracted or selected, wherein the representation data 33 comprise a representation of object features of the object 21 as they have been extracted from the sensor data 18 by the machine learning unit 15. In a step S12 these representation data 33 are transferred as reference data 34 to the respective machine learning unit 15 of each vehicle 12, 13 that is operated as a respective second vehicle. This transferal of reference data 34 may comprise the additional feature that the reference data 34 are transferred from the first vehicle to a digital map database 35 first. The first vehicle 11 transfers the reference data 34 together with location data 36 indicating a spatial area 37 in which the object 21 has been detected by the at least one additional sensor 27 in step S10. In other words, when detecting object 21 of unknown object type, a current position 38 of vehicle 11 may be derived or determined. Vehicle 11 may comprise a receiver module 39 for receiving from a GNSS 40 a position signal 41 indicating, for example, a geographic position or geographic coordinates of the position 38. The GNSS (global navigation satellite system) may be the GPS (global positioning system), for example.

For downloading adequate reference data 34 from the digital map database 35, the second vehicle, e.g. vehicle 12, may determine its current position and may determine, in which spatial area 37 vehicle 12 is currently driving. This may be performed by an electronic control unit 42 of the second vehicle 12. From the database 35, those reference data 34 describing at least one object that has been observed in the spatial area 37 and that was of unknown object type, may be transferred to vehicle 12.

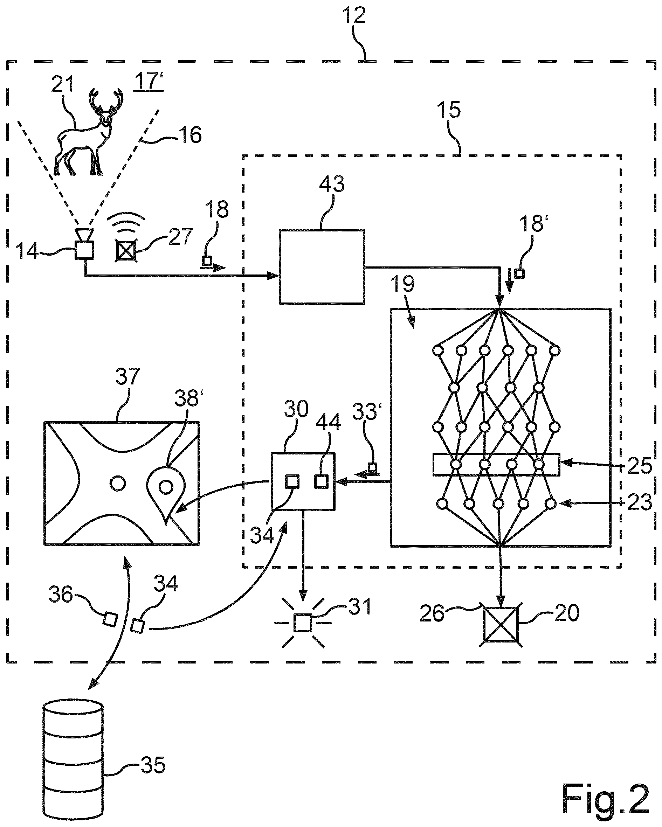

Fig. 2 illustrates, how in the second vehicle 12, the detection of object 21 may be performed, although the object 21 in surroundings 17' of the second vehicle 12 is of unknown object type and although no additional sensor 27 is present. Of course, the description also accounts for or applies to vehicles 13.

If the at least one sensor 14 of vehicle 12 generates sensor data 18 that describes also object 21, as object 21 is within the region of coverage 16 of the at least one sensor 14, the sensor data provided to the machine learning unit 15 may be processed in the same way as they would in machine learning unit 15 of the first vehicle 11. Fig. 2 additionally illustrates, that each machine learning unit 15 may operate an extraction module 43 which may be based on an artificial neural network and which may provide, e.g. bounding box information or bounding box data indicating where in e.g. a camera image or generally where inside the sensor data 18 or which part of the sensor data 18 describes object 21. A selection 18' of sensor data 18 may then be further processed by an artificial neural network 19 in the described way.

As object 21 is of unknown object type for machine learning unit 15 of second vehicle 12, there will be a failure 26 of producing or generating the classification output signal 20 by the classification output logic 23, i.e. the bottom layer of neural network 19.

However, at least one intermediate processing element 25, e.g. at least one intermediate layer of neural network 19, may be linked to the detection logic 30. Detection logic 30 may be based, e.g. on a program module for a processing unit of electronic control unit 42.

Detection logic 30 may determine a current position 38' of second vehicle 12 and may determine which spatial area 37 second vehicle 12 is in. Corresponding location data 36 may be provided to the digital map database 35 and for spatial area 37, corresponding reference data 34 may be transferred to second vehicle 12. Each vehicle 11, 12, 13 may be linked to the digital database 35 on the basis of, e.g., a mobile communication connection and/or WIFI-connection. The link to database 35 may also be based on an internet connection.

Detection logic 30 may also receive representation data 33' from at least one intermediate processing element 25 of neural network 19 of machine learning unit 15 of second vehicle 12. On the basis of a similarity criterion 44, detection logic 30 may compare the received reference data 34 with the representation data 33'. If according to the similarity criterion 44, the representation data 33' correspond or provide a minimum degree of similarity with regard to reference data 34, the described auxiliary detection signal 31 may be generated by detection logic 30. Thus, although no additional sensor 27 may be available (absence of additional sensor 27) and although no classification output signal 20 may be generated, the presence of object 21 in the surroundings 17' may nevertheless be signaled by the auxiliary detection signal 31. Thus, an electronic control unit providing autopilot functionality in the second vehicle 12 (and similar in vehicles 13), may still be able to plan a driving trajectory around object 21 for avoiding a collision, although the object type of object 21 is unknown.

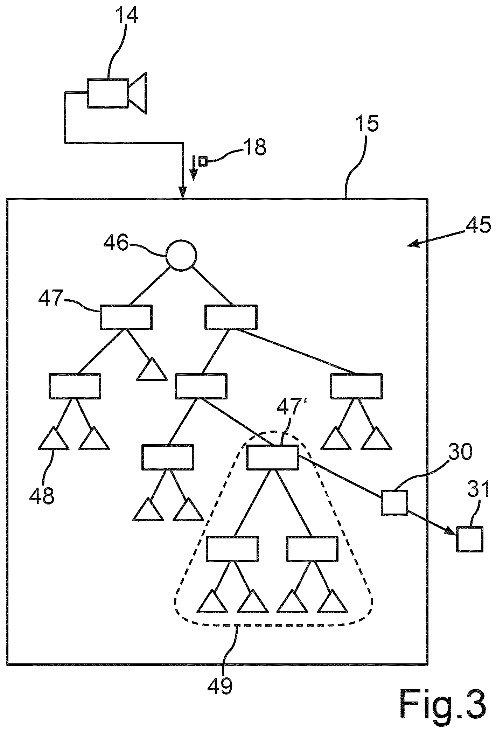

Fig. 3 illustrates an alternative implementation where in the vehicles 11, 12, 13 by the respective machine learning unit 15, a decision tree 45 may be provided. A decision tree 45 may comprise an input logic 22 as a root 46 of the tree, a respective intermediate processing element as a respective decision node 47 (represented as a rectangle) and a classification output logic as leaves 48 of the decision tree 45 (the leaves 48 are represented by a respective triangle). For the sake of clarity, only one respective reference sign is shown for decision nodes 47 and the leaves 48. The detection logic 30 may be linked to at least one intermediate processing element in the form of at least one node 47. It may also be possible to replace a sub tree 49 by the detection logic 30. Whenever a decision node 47 is reached to which detection logic 30 is linked (shown as node 47'), detection logic 30 may interpret this as detection of an unknown object and may therefore generate the auxiliary detection signal 31.

For example, machine learning unit 15 may be trained or prepared to detect at least one of the following object types: vehicle, animal, pedestrian, and cyclist. Object 21 of unknown object type may be, e.g., a power plane, a scaffolding a barrier, just to name some examples.

A preferred embodiment provides a solution that enables an object recognition device to also provide an output even in the case that an object of unknown object type is encountered.

A first vehicle uses at least one additional sensor (radar, sonar) for detecting objects. If the at least one additional sensor indicates that there is an object in the surroundings 17 of the first vehicle and the artificial neural network of the object recognition device does not provide a corresponding output signal, it is assumed that the object is of unknown object type (such that the final layer stays silent). In the neural network, layer data of the penultimate layer and/or any higher layer (i.e. at least one layer before the final layer that stores the information about object types) is gathered. These layer data comprise a representation of the object features of the object as they have been extracted from the camera images of the camera. These extracted layer data are called comparison data, in the following

A second vehicle is provided with these comparison data. In the second vehicle an object recognition device with a camera and an artificial neural network is also present. The camera images may show an object of unknown object type. The neural network has a special additional comparison mechanism. The penultimate and/or another higher layer is not only linked to the final layer for recognizing an object of known (!) object type. But additionally, the penultimate layer (or any other higher layer) is also linked to a comparison unit that compares layer data from the penultimate / higher layer (as they can be extracted from the neural network of the second vehicle and as they represent object features of the object in the surroundings 17' of the second vehicle) to the received comparison data. The comparison can be performed on the basis of a so-called distance matrix.

If the comparison unit detects that a predefined distance measure indicating a mathematical distance between the extracted layer data of the penultimate / higher layer on one side and the received comparison data on the other side, a signal is generated that indicates that an object of unknown object type has been detected.

Thus, although the object type of the object in the surroundings 17' of the second vehicle is unknown, the object recognition device of the second vehicle provides the signal that there is an object.

In order to reduce computational load in the second vehicle, a digital map database may be provided for storing different comparison data for different unknown object types. By means of the map database, the comparison data are associated with a respective specific spatial area, where these comparison data have been generated. Whenever the second vehicle enters such an area, it will download the comparison data for this area. The comparison unit then has to perform comparisons of layer data from the penultimate / higher layer only with comparison data that are valid for this area.

Self-driving vehicles are built and/or trained to recognize a relatively small set of limited set of objects on the basis of an artificial neural network. When encountering an object of an object type that is not in this set, this may provide a problem. Current vehicles will not deal with this problem. They have to update their internal model by retraining their neural network. They may also re-route their planned driving route in order to avoid a section of a road, where the problem that may arise. Additionally, or alternatively, they may send pictures to a backend server (internet server) or they may exchange pictures among each other in order to describe the object that may cause the problem.

However, machine-learning algorithms have multiple layers of representation (multilayer neural networks). Starting from a top layer that may receive sensor data, the deeper the layer, the closer to the final object classification one gets. With each layer, the sensor data are processed further in order to obtain a higher level of representation (evaluation and/or description of edges and/or colors and/or contrast and/or textures and/or patterns). If an unknown object (not part of the set of trained object types) is encountered, the last layer or bottom layer will not be able to classify the high level representation for signaling one of the known object types.

However, a vehicle that encounters such an unknown object may record the higher-level representation in the form layer data of at least one layer higher than the last layer. Additionally, the position or spatial area where this object has been encountered, may also be signaled as location data or position data. Based on these location data, a spatial database may be created where layer data may be stored as reference data that may be associated with a respective spatial area where the corresponding object has been observed.

A second vehicle may download those reference data of local unknown objects for the spatial area where the vehicle is currently driving through. Data layer of the neural network of the second vehicle may then be compared to the reference data in order to enable the second vehicle to recognize the object on the basis of its neural network without any additional sensor, only the camera that also provides the sensor data for the neural network.

Thus, in general, whenever a vehicle detects an object it cannot classify by means of its neural network, it sends its layer data, i.e. the higher-level representation, to the spatial database. Other vehicles may download these layer data as reference data when they approach the corresponding spatial area where the object has been observed. Now, these other vehicles are able to compare their own sensor input and/or layer data with the reference data in order to recognize this object.

Overall, the example shows how a spatial data base for the representation of uncommon or unknown objects is provided by the invention.

## Claims

1. A computer implemented method for detecting an object (21) in surroundings (17') of a second vehicle (12), wherein a first vehicle (11) and the second vehicle (12) each comprise both at least one image sensor (14) for generating sensor data (18) and a machine learning unit (15) for recognizing an object (21) type of the object on the basis of the respective sensor data (18), wherein
the at least one image sensor (14) of the second vehicle (12) generates sensor data describing the object (21), and
the first vehicle (11) uses at least one additional sensor (27) for detecting the presence of the object (21) independently from the machine learning unit (15), wherein the at least one additional sensor (27) comprises at least one of radar, sonar or lidar, and, if
a) the at least one additional sensor (27) signals that the object (21) is in the surroundings (17) of the first vehicle (11) and
b) a classification output logic (23) of the machine learning unit (15) of the first vehicle (11) fails (26) to provide a corresponding classification output signal (20) indicating a known object type,
predefined representation data (33) of at least one intermediate processing element (25) of the machine learning unit (15) of the first vehicle is extracted, wherein the representation data (33) comprise a representation of object features of the object (21) as they have been extracted from the sensor data (18) by the machine learning unit (15) of the first vehicle, and
the extracted predefined representation data (33) are transferred as reference data (34) to the machine learning unit (15) of the second vehicle (12), wherein
the machine learning unit (15) of the second vehicle (12) receives sensor data from the at least one sensor of the second vehicle (12) and
the machine learning unit (15) of the second vehicle (12) operates a predefined detection logic (30) which comprises that at least one intermediate processing element (25) of the machine learning unit (15) of the second vehicle (12) is linked to the predefined detection logic (30) such that predefined representation data (33') of the at least one intermediate processing element (25) of the machine learning unit of the second vehicle (12) is available to the predefined detection logic (30) and the predefined detection logic (30) compares the predefined representation data (33') of the at least one intermediate processing element (25) of the machine learning unit of the second vehicle (12) with the received reference data (34), wherein
• in the first vehicle (11) and in the second vehicle (12) the respective machine learning unit (15) each comprises an artificial neural network (19) and the respective classification output logic (23) comprises a last layer of the neural network (19) and the respective at least one intermediate processing element (25) comprises at least one intermediate layer of the respective neural network (19) and the respective predefined representation data (33) comprise layer data of the at least one intermediate layer, or
• in the first vehicle (11) and in the second vehicle (12) the respective machine learning unit (15) each comprises a decision tree (45) and the respective classification output logic (23) comprises leaves (48) of the decision tree (45) and the respective at least one intermediate processing element comprises at least one decision node (47) of the decision tree (45) and the respective predefined representation data (33) comprise node data of the at least one decision node (47),
and, if the predefined detection logic (30) detects that the predefined representation data (33') and the received reference data (34) fulfill a predefined similarity criterion (44), an auxiliary detection signal (31) is generated indicating that the object (21) of unknown object type has been detected.

2. Method according to claim 1, wherein for transferring the reference data(34) from the first vehicle (11) to the second vehicle (12), a digital map database (35) is provided for storing different reference data (34) of several different objects (21) of unknown object type together with respective location data (36) indicating a spatial area (37) where the respective object (21) has been observed, and before or whenever the second vehicle (12) enters a respective spatial area (37), the corresponding reference data (34) for this spatial area (37) are transferred to the second vehicle (12).

3. Method according to claim 2, wherein the predefined detection logic (30) of the machine learning unit (15) of the second vehicle (12) only uses the reference data (34) for the spatial area (37) in which the second vehicle (12) is currently driving in.

4. Method according to any of the preceding claims, wherein the predefined detection logic (30) compares the predefined representation data (33') with the reference data (34) on the basis of a mathematical distance measure and the similarity criterion (44) comprises that the distance measure indicates a distance that is smaller than predefined threshold.

5. Method according to any of the preceding claims, wherein by the predefined detection logic (30) at least a part (49) of the classification output logic (23) or at least one intermediate processing element (25) of the machine learning unit (15) of the second vehicle (12) is replaced.

6. Method according to any of the preceding claims, wherein the at least one sensor (14) for generating sensor data (18) in the first vehicle (11) or in the second vehicle (12) respectively comprises a camera and the sensor data (18) comprise image data.

7. System (10) for detecting an object (21) in surroundings (17') of a second vehicle (12), the system (10) comprising at least two vehicles (11, 12, 13), wherein each vehicle (11, 12, 13) comprises at least one sensor (14) for generating sensor data (18) and a machine learning unit (15) for detecting the object (21) on the basis of the sensor data (18) and wherein at least one of the vehicles (11) comprises at least one additional sensor (27) for detecting the object (21) independently of its machine learning unit (15), wherein
the system (10) comprises means to perform a method according to any of the preceding claims by operating the at least one vehicle (11) with the respective at least one additional sensor (27) as a respective first vehicle (11) and the at least one other vehicle (12) of the at least two vehicles (11, 12, 13) as a respective second vehicle (12).

## Patentansprüche

1. Ein computerimplementiertes Verfahren zum Erkennen eines Objekts (21) in einer Umgebung (17') eines zweiten Fahrzeugs (12), wobei ein erstes Fahrzeug (11) und das zweite Fahrzeug (12) jeweils mindestens einen Bildsensor (14) zum Erzeugen von Sensordaten (18) und eine maschinelle Lerneinheit (15) zum Erkennen eines Objekttyps (21) auf der Grundlage der jeweiligen Sensordaten (18) umfassen, wobei
der mindestens eine Bildsensor (14) des zweiten Fahrzeugs (12) Sensordaten erzeugt, die das Objekt (21) beschreiben, und
das erste Fahrzeug (11) mindestens einen zusätzlichen Sensor (27) verwendet, um die Anwesenheit des Objekts (21) unabhängig von der maschinellen Lerneinheit (15) zu erkennen , wobei der mindestens eine zusätzliche Sensor (27) mindestens einen der folgenden Sensoren umfasst: Radar, Sonar oder Lidar, und, falls
a) der mindestens eine weitere Sensor (27) signalisiert, dass sich das Objekt (21) in der Umgebung (17) des ersten Fahrzeugs (11) befindet und
b) eine Klassifizierungsausgabelogik (23) der maschinellen Lerneinheit (15) des ersten Fahrzeugs (11) liefert kein entsprechendes Klassifizierungsausgabesignal (20), das einen bekannten Objekttyp anzeigt (26),
vordefinierte Repräsentationsdaten (33) mindestens eines Zwischenverarbeitungselements (25) der maschinellen Lerneinheit (15) des ersten Fahrzeugs extrahiert werden, wobei die Repräsentationsdaten (33) eine Repräsentation von Objektmerkmalen des Objekts (21) umfassen, wie sie von der maschinellen Lerneinheit (15) des ersten Fahrzeugs aus den Sensordaten (18) extrahiert wurden, und
die extrahierten vordefinierten Repräsentationsdaten (33) als Referenzdaten (34) an die maschinelle Lerneinheit (15) des zweiten Fahrzeugs (12) übertragen werden, wobei
die maschinelle Lerneinheit (15) des zweiten Fahrzeugs (12) Sensordaten von dem mindestens einen Sensor des zweiten Fahrzeugs (12) empfängt und
die maschinelle Lerneinheit (15) des zweiten Fahrzeugs (12) eine vordefinierte Erkennungslogik (30) betreibt, die umfasst, dass mindestens ein Zwischenverarbeitungselement (25) der maschinellen Lerneinheit (15) des zweiten Fahrzeugs (12) mit der vordefinierten Erkennungslogik (30) derart verknüpft ist, dass vordefinierte Darstellungsdaten (33') des mindestens einen Zwischenverarbeitungselements (25) der maschinellen Lerneinheit des zweiten Fahrzeugs (12) der vordefinierten Erkennungslogik (30) zur Verfügung stehen und die vordefinierte Erkennungslogik (30) die vordefinierten Darstellungsdaten (33') des mindestens einen Zwischenverarbeitungselements (25) der maschinellen Lerneinheit des zweiten Fahrzeugs (12) mit den empfangenen Referenzdaten (34) vergleicht, wobei
• im ersten Fahrzeug (11) und im zweiten Fahrzeug (12) die jeweilige maschinelle Lerneinheit (15) jeweils ein künstliches neuronales Netzwerk (19) umfasst und die jeweilige Klassifizierungsausgabelogik (23) eine letzte Schicht des neuronalen Netzwerks (19) umfasst und das jeweilige mindestens eine Zwischenverarbeitungselement (25) mindestens eine Zwischenschicht des jeweiligen neuronalen Netzwerks (19) umfasst und die jeweiligen vordefinierten Darstellungsdaten (33) Schichtdaten der mindestens einen Zwischenschicht umfassen, oder
• im ersten Fahrzeug (11) und im zweiten Fahrzeug (12) umfasst die jeweilige maschinelle Lerneinheit (15) jeweils einen Entscheidungsbaum (45) und die jeweilige Klassifizierungsausgabelogik (23) umfasst Blätter (48) des Entscheidungsbaums (45) und das jeweilige mindestens eine Zwischenverarbeitungselement umfasst mindestens einen Entscheidungsknoten (47) des Entscheidungsbaums (45) und die jeweiligen vordefinierten Darstellungsdaten (33) umfassen Knotendaten des mindestens einen Entscheidungsknotens (47),
und wenn die vordefinierte Erkennungslogik (30) erkennt, dass die vordefinierten Darstellungsdaten (33') und die empfangenen Referenzdaten (34) ein vordefiniertes Ähnlichkeitskriterium (44) erfüllen, wird ein Hilfserkennungssignal (31) erzeugt, das anzeigt, dass das Objekt (21) unbekannten Objekttyps erkannt wurde.

2. Verfahren nach Anspruch 1, wobei zur Übertragung der Referenzdaten (34) vom ersten Fahrzeug (11) zum zweiten Fahrzeug (12) eine digitale Kartendatenbank ( 35) zur Verfügung gestellt wird , in der unterschiedliche Referenzdaten (34) mehrerer unterschiedlicher Objekte (21) unbekannten Objekttyps zusammen mit jeweiligen Standortdaten (36) gespeichert sind, die einen räumlichen Bereich (37) angeben, in dem das jeweilige Objekt (21) beobachtet wurde, und wobei vor oder immer dann, wenn das zweite Fahrzeug (12) in einen jeweiligen räumlichen Bereich (37) einfährt, die entsprechenden Referenzdaten (34) für diesen räumlichen Bereich (37) zum zweiten Fahrzeug (12) übertragen werden.

3. Verfahren nach Anspruch 2, wobei die vordefinierte Erkennungslogik (30) der maschinellen Lerneinheit (15) des zweiten Fahrzeugs (12) nur die Referenzdaten (34) für den Raumbereich (37) verwendet, in dem sich das zweite Fahrzeug (12) aktuell befindet.

4. Verfahren nach einem der vorhergehenden Ansprüche, wobei die vordefinierte Erkennungslogik (30) die vordefinierten Darstellungsdaten (33') mit den Referenzdaten (34) auf der Grundlage eines mathematischen Distanzmaßes vergleicht und das Ähnlichkeitskriterium (44) umfasst, dass das Distanzmaß eine Distanz anzeigt, die kleiner als ein vordefinierter Schwellenwert ist.

5. Verfahren nach einem der vorhergehenden Ansprüche, wobei durch die vordefinierte Erkennungslogik (30) zumindest ein Teil (49) der Klassifizierungsausgabelogik (23) oder zumindest ein Zwischenverarbeitungselement (25) der maschinellen Lerneinheit (15) des zweiten Fahrzeugs (12) ersetzt wird.

6. Verfahren nach einem der vorhergehenden Ansprüche, wobei der mindestens eine Sensor (14) zum Erzeugen von Sensordaten (18) im ersten Fahrzeug (11) oder im zweiten Fahrzeug (12) jeweils eine Kamera umfasst und die Sensordaten (18) Bilddaten umfassen.

7. System (10) zum Erkennen eines Objekts (21) in einer Umgebung (17') eines zweiten Fahrzeugs (12), wobei das System (10) mindestens zwei Fahrzeuge (11, 12, 13) umfasst, wobei jedes Fahrzeug (11, 12, 13) mindestens einen Sensor (14) zum Erzeugen von Sensordaten (18) und eine maschinelle Lerneinheit (15) zum Erkennen des Objekts (21) auf Basis der Sensordaten (18) umfasst und wobei mindestens eines der Fahrzeuge (11) mindestens einen weiteren Sensor (27) zum Erkennen des Objekts (21) unabhängig von seiner maschinellen Lerneinheit (15) umfasst, wobei
das System (10) Mittel zum Durchführen eines Verfahrens nach einem der vorhergehenden Ansprüche umfasst, indem das mindestens eine Fahrzeug (11) mit dem jeweiligen mindestens einen zusätzlichen Sensor (27) als jeweiliges erstes Fahrzeug (11) und das mindestens eine andere Fahrzeug (12) der mindestens zwei Fahrzeuge (11, 12, 13) als jeweiliges zweites Fahrzeug (12) betrieben wird.

## Revendications

1. Procédé informatisé de détection d'un objet (21) dans l'environnement (17') d'un second véhicule (12), dans lequel le premier véhicule (11) et le second véhicule (12) comprennent chacun au moins un capteur d'image (14) pour générer des données de capteur (18) et une unité d'apprentissage automatique (15) pour reconnaître un type d'objet (21) sur la base des données de capteur respectives (18).
le ou les capteurs d'image (14) du deuxième véhicule (12) génèrent des données de capteur décrivant l'objet (21), et
le premier véhicule (11) utilise au moins un capteur supplémentaire (27) pour détecter la présence de l'objet (21) indépendamment de l'unité d'apprentissage automatique (15) , le ou les capteurs supplémentaires (27) comprenant au moins un radar, un sonar ou un lidar, et, si
a) le au moins un capteur supplémentaire (27) signale que l'objet (21) se trouve dans l'environnement (17) du premier véhicule (11) et
b) une logique de sortie de classification (23) de l'unité d'apprentissage automatique (15) du premier véhicule (11) ne parvient pas (26) à fournir un signal de sortie de classification correspondant (20) indiquant un type d'objet connu,
des données de représentation prédéfinies (33) d'au moins un élément de traitement intermédiaire (25) de l'unité d'apprentissage automatique (15) du premier véhicule sont extraites, les données de représentation (33) comprenant une représentation des caractéristiques de l'objet (21) telles qu'elles ont été extraites des données de capteur (18) par l'unité d'apprentissage automatique (15) du premier véhicule, et
les données de représentation prédéfinies extraites (33) sont transférées comme données de référence (34) à l'unité d'apprentissage automatique (15) du deuxième véhicule (12), dans lequel
l'unité d'apprentissage automatique (15) du deuxième véhicule (12) reçoit des données de capteur provenant d'au moins un capteur du deuxième véhicule (12) et
L'unité d'apprentissage automatique (15) du second véhicule (12) exploite une logique de détection prédéfinie (30) qui comprend qu'au moins un élément de traitement intermédiaire (25) de l'unité d'apprentissage automatique (15) du second véhicule (12) est lié à la logique de détection prédéfinie (30) de telle sorte que des données de représentation prédéfinies (33') de l'au moins un élément de traitement intermédiaire (25) de l'unité d'apprentissage automatique du second véhicule (12) sont disponibles pour la logique de détection prédéfinie (30) et la logique de détection prédéfinie (30) compare les données de représentation prédéfinies (33') de l'au moins un élément de traitement intermédiaire (25) de l'unité d'apprentissage automatique du second véhicule (12) aux données de référence reçues (34), dans lequel
• dans le premier véhicule (11) et dans le deuxième véhicule (12), l'unité d'apprentissage automatique respective (15) comprend chacune un réseau neuronal artificiel (19) et la logique de sortie de classification respective (23) comprend une dernière couche du réseau neuronal (19) et l' au moins un élément de traitement intermédiaire respectif (25) comprend au moins une couche intermédiaire du réseau neuronal respectif (19) et les données de représentation prédéfinies respectives (33) comprennent des données de couche de la ou des couches intermédiaires, ou
• dans le premier véhicule (11) et dans le deuxième véhicule (12), l'unité d'apprentissage automatique respective (15) comprend chacune un arbre de décision (45) et la logique de sortie de classification respective (23) comprend des feuilles (48) de l'arbre de décision (45) et l' au moins un élément de traitement intermédiaire respectif comprend au moins un nœud de décision (47) de l'arbre de décision (45) et les données de représentation prédéfinies respectives (33) comprennent des données de nœud de l'au moins un nœud de décision (47),
et, si la logique de détection prédéfinie (30) détecte que les données de représentation prédéfinies (33') et les données de référence reçues (34) satisfont un critère de similarité prédéfini (44), un signal de détection auxiliaire (31) est généré indiquant que l'objet (21) de type d'objet inconnu a été détecté.

2. Procédé selon la revendication 1, dans lequel, pour transférer les données de référence (34) du premier véhicule (11) au deuxième véhicule (12), une base de données cartographique numérique (35) est prévue pour stocker différentes données de référence (34) de plusieurs objets différents (21) de type d'objet inconnu avec des données de localisation respectives (36) indiquant une zone spatiale (37) où l'objet respectif (21) a été observé, et avant ou chaque fois que le deuxième véhicule (12) entre dans une zone spatiale respective (37), les données de référence correspondantes (34) pour cette zone spatiale (37) sont transférées au deuxième véhicule (12).

3. Procédé selon la revendication 2, dans lequel la logique de détection prédéfinie (30) de l'unité d'apprentissage automatique (15) du deuxième véhicule (12) utilise uniquement les données de référence (34) pour la zone spatiale (37) dans laquelle le deuxième véhicule (12) se déplace actuellement.

4. Procédé selon l'une quelconque des revendications précédentes, dans lequel la logique de détection prédéfinie (30) compare les données de représentation prédéfinies (33') aux données de référence (34) sur la base d'une mesure de distance mathématique et le critère de similarité (44) comprend que la mesure de distance indique une distance qui est inférieure au seuil prédéfini.

5. Procédé selon l'une quelconque des revendications précédentes, dans lequel, par la logique de détection prédéfinie (30), au moins une partie (49) de la logique de sortie de classification (23) ou au moins un élément de traitement intermédiaire (25) de l'unité d'apprentissage automatique (15) du deuxième véhicule (12) est remplacé.

6. Procédé selon l'une quelconque des revendications précédentes, dans lequel le ou les capteurs (14) destinés à générer des données de capteur (18) dans le premier véhicule (11) ou dans le deuxième véhicule (12) comprennent respectivement une caméra et les données de capteur (18) comprennent des données d'image.

7. Système (10) de détection d'un objet (21) dans l'environnement (17') d'un second véhicule (12), le système (10) comprenant au moins deux véhicules (11, 12, 13), chaque véhicule (11, 12, 13) comprenant au moins un capteur (14) générant des données de capteur (18) et une unité d'apprentissage automatique (15) permettant de détecter l'objet (21) à partir de ces données de capteur (18), et au moins un des véhicules (11) comprenant au moins un capteur supplémentaire (27) permettant de détecter l'objet (21) indépendamment de son unité d'apprentissage automatique (15).
le système (10) comprend des moyens pour mettre en œuvre un procédé selon l'une quelconque des revendications précédentes en faisant fonctionner le ou les véhicules (11) avec le ou les capteurs supplémentaires respectifs (27) en tant que premier véhicule respectif (11) et le ou les autres véhicules (12) des au moins deux véhicules (11, 12, 13) en tant que deuxième véhicule respectif (12).
